# EUROPEAN PATENT APPLICATION

(11) **EP 1 217 720 A1**
(43) Date of publication of application: **26.06.2002**
(21) Application number: 00403644.8
(22) Date of filing: 21.12.2000
(51) Int. Cl.: H02M 3/335, H02M 3/156

(54) **Apparatus and method for controlling the power output of a power supply using comparators**

(71) Applicant: Semiconductor Components Industries, LLC, Phoenix, Arizona 85008 (US)
(72) Inventor: Foyhenetche, Philippe, 31100 Toulouse (FR); Basso, Christophe, 31820 Pibrac (FR); Omet, Dominique, 31270 Cugnaux (FR)
(74) Representative: Dearling, Bruce Clive

(57) **Abstract**

A power supply (100) uses two comparators (C1, C2) to clamp the peak primary side current of the power supply. A reference voltage (V_{ref}) is provided as an input to a first comparator (C2) and is used to clamp the primary current to a minimum level. A feedback voltage (V_{FB}) from the secondary side of the power supply is used to clamp the primary current to a maximum level. In one approach, the outputs of the two comparators are combined using a logic gate (A1) and a feedback voltage (Vₛₑₙₛₑ) from the primary side is provided as an input to each of the two comparators.

## Description

### Field Of The Invention

The present invention relates in general to a power supply and more particularly to an apparatus and method for maintaining a minimum peak primary current, such as in, for example, low input standby power offline applications, using more than one comparator.

### Background Of The Invention

A switched-mode power supply (SMPS) is commonly used for providing power to an electronic device such as a television or a video cassette recorder. In some cases it is desirable to clamp the power supply's primary current between a maximum level (Iₘₐₓ), which protects the power supply circuitry from excessive current pulses, and a minimum level (Iₘᵢₙ). Clamping to a minimum level is often desirable to reduce the standby input power drawn from the power input mains when the power supply will be actually delivering minimal power (for example, such as when the load is removed). This is accomplished by continuously monitoring the primary current setpoint. When the peak primary current moves between Iₘᵢₙ and Iₘₐₓ, the power supply operates in a known frequency configuration (such as, for example, a fixed switching frequency configuration). When the output power demand diminishes, the control feedback loop of the power supply gradually causes a lowering in the peak primary current setpoint, and this setpoint decreases towards Iₘᵢₙ. When Iₘᵢₙ has been reached, the design of the power supply is such that the peak current does not go below this limit. Instead, the power supply controller acts upon another parameter to further diminish the delivered output power. This can be accomplished by either skipping switching cycles or decreasing the switching frequency through dedicated circuitry (using, for example, a voltage controlled oscillator (VCO)). Using these approaches allows skip cycle or variable frequency operation at constant minimum peak current pulses.

Typically, existing power supplies attempt to control minimum output power using clamping circuits with bipolar transistors. However, such circuits suffer from undesirable voltage variations due to the variability of the operating characteristics of the base-emitter junction of the transistors with changing temperature and/or other factors. Accordingly, it is desired to provide an improved power supply that more accurately controls minimum power output without excessive variations due to temperature or other uncontrollable factors.

### Summary of the Invention

A power supply uses two comparators to clamp the peak primary side current of the power supply. A reference voltage is provided as an input to a first comparator and is used to clamp the primary current to a minimum level. A feedback voltage from the secondary side of the power supply is used to clamp the primary current to a maximum level. In one approach, the outputs of the two comparators are combined using a logic gate and a feedback voltage from the primary side is provided as an input to each of the two comparators.

A control circuit (for a power supply) in accordance with the present invention is set out in claims 1, 2 and 9. A method of operating the control circuit is disclosed in independent claim 13, whilst a power supply according to the present invention is described in claim 18.

The preferred embodiment advantageously provides an apparatus and method for controlling a power supply using more than one comparator have been disclosed. The present invention has the advantages of more accurately controlling minimum primary current and minimum output power and uses a reference voltage that is very stable through temperature and other variations. In addition, the present invention permits accurate determination of the maximum and minimum current thresholds of the primary current. Further, the circuit design is relatively simple and requires no special tuning or fabrication techniques.

### Brief Description Of The Drawings

An exemplary embodiment of the present invention will now be described with reference to the accompanying drawings, in which:
FIG. 1 is a schematic diagram of a power supply system according to an embodiment of the present invention;
FIG. 2 is a more detailed schematic diagram of the power supply system of FIG. 1; and
FIG. 3 is a voltage waveform illustrating the operation of the power supply system of FIG. 1.

### Detailed Description Of The Drawings

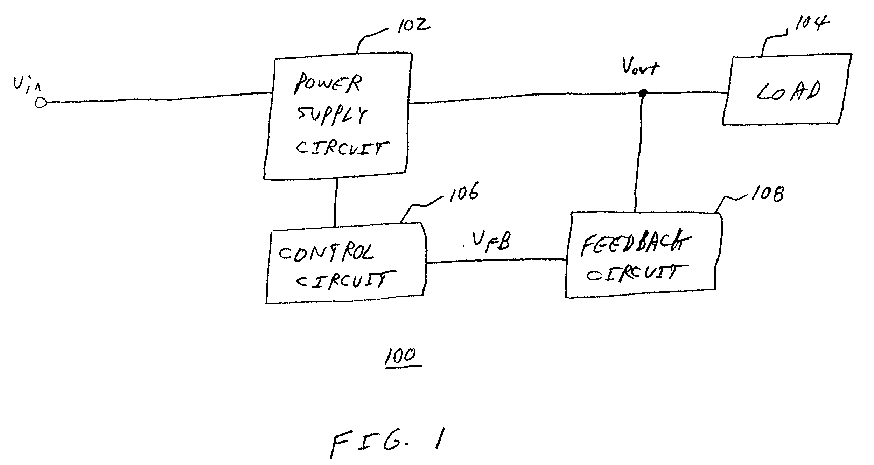

The present invention generally provides an apparatus and method for controlling the minimum power output of a power supply using comparators. FIG. 1 is a schematic diagram of a power supply system 100 according to an embodiment of the present invention. Power supply system 100 comprises a power supply circuit 102, which receives an input voltage Vᵢₙ and provides output voltage Vₒᵤₜ, a load 104, a control circuit 106 for controlling the power supply circuit 102, and a feedback circuit 108, which receives Vₒᵤₜ from the secondary side/output of power supply circuit 102 and provides a feedback signal voltage V_{FB} to control circuit 106.

Power supply system 100 is, for example, a switched-mode power supply using a current-mode flyback configuration. Vᵢₙ is, for example, a rectified DC voltage input provided from an AC-DC rectifying circuit (not shown). Load 104 generally represents, for example, the load placed on power supply circuit 102 by the circuitry for an electronic appliance, such as a television or a cellular handset.

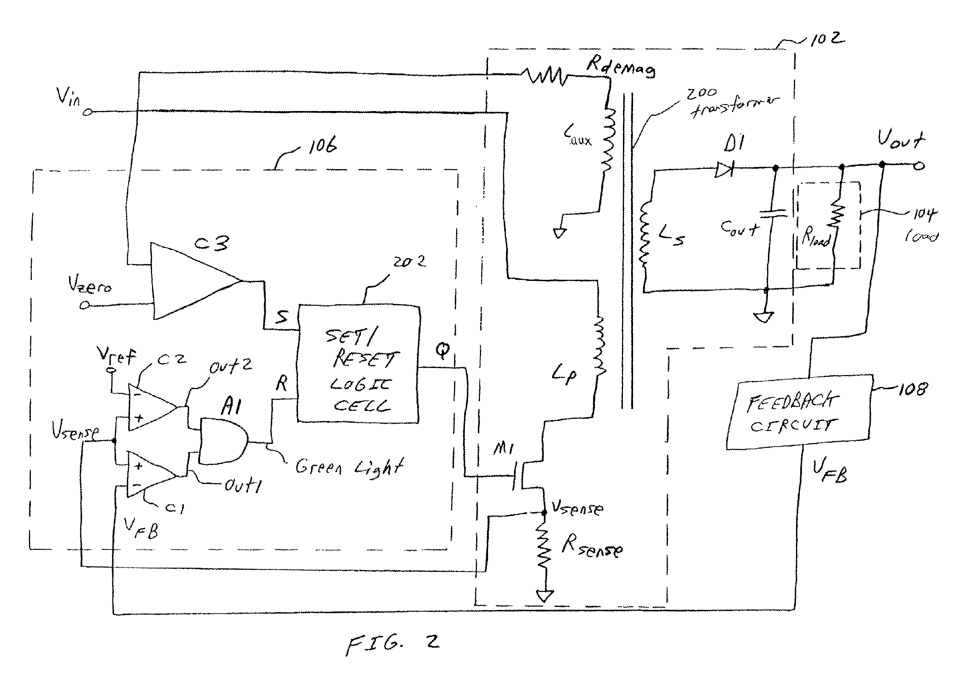

FIG. 2 is a more detailed schematic diagram of power supply system 100. Power supply circuit 102 comprises a transformer 200 having primary winding inductance L_{P}, secondary winding inductance L_{S}, and auxiliary winding inductance Lₐᵤₓ. Primary current through the primary side of transformer 200 is switched by transistor M1, which is for example a MOSFET. A resistor Rₛₑₙₛₑ is coupled to transistor M1 to provide a primary side voltage feedback signal Vₛₑₙₛₑ indicative of the level of primary current through transformer 200. A resistor R_{demag} is coupled in series with Lₐᵤₓ for the detection of the demagnetization of transformer 200 as discussed below. The secondary side of power supply circuit 102 comprises a diode D1 coupled in series with L_{S} and a smoothing output capacitor Cₒᵤₜ coupled in parallel with resistor R_{load}, which generally represents load 104 of FIG. 1.

Feedback circuit 108 receives Vₒᵤₜ and provides V_{FB} to control circuit 106. Feedback circuit 108 is, for example, a conventional voltage reference circuit (for example, a simple zener diode) typically associated with an optocoupler.

Control circuit 106 comprises a conventional demagnetization comparator C3 coupled to the set input S of a conventional set/reset logic cell 202, which may be implemented using, for example, a conventional latch. A reference voltage V_{zero} is provided as the other input to C3. V_{zero} is, for example, a low DC voltage generated by control circuit 106 and may have a typical value of about 60 mV. The polarity of C3 is set to correspond to the polarity of Lₐᵤₓ. C3 is used to detect the core demagnetization of transformer 200, using a conventional approach, after transistor M1 has been opened and the primary-side energy has been substantially transferred to the secondary side of power supply circuit 102. When demagnetization is detected by C3, the output of C3 goes high, which sets the output signal Q of logic cell 202 to a high state, thus turning on transistor M1 for another charging cycle.

Logic cell 202 provides an output signal Q that is coupled for turning transistor M1 on and off during operation of power supply system 100. Signal Q is latched to an on or logic high state when the set input goes high and to an off or logic low state when the reset input goes high. The on state of signal Q corresponds to the turning on of transistor M1, and the off state corresponds to the turning off of transistor M1. In other words, the turn-on sequence for transistor M1 occurs when the core of transformer 200 is demagnetized (and the output of C3 goes high) and is completed when the primary peak current (which is sensed by Rₛₑₙₛₑ) reaches a level imposed by the feedback circuit through signal V_{FB}. At such time, transistor M1 opens and remains off until the moment of demagnetization detection again occurs. It should also be noted that in power supply system 100 V_{FB} is internally clamped using conventional circuitry (not shown) to a fixed voltage, for example 1V, which prevents the current through Rₛₑₙₛₑ from being greater than the fixed voltage divided by Rₛₑₙₛₑ, which is equal to Iₘₐₓ.

According to the present invention, control circuit 106 comprises comparators C1 and C2, which are configured with their outputs (indicated as signals Out1 and Out2) coupled to logic inputs of AND logic gate A1. The output of logic gate A1 (indicated as signal Green Light) is coupled to the reset input R of logic cell 202.

Control circuit 106 receives Vₛₑₙₛₑ as a primary feedback signal and V_{FB} as a secondary feedback signal. Vₛₑₙₛₑ is coupled as a common input to the non-inverting inputs of comparators C2 and C1. A reference voltage V_{ref} is coupled to the inverting input of C2, and V_{FB} is coupled to the inverting input of C1. According to the present invention, V_{ref} is preferably generated based on a conventional bandgap architecture. By using a bandgap to generate V_{ref}, control circuit 106 is much less susceptible to variations in the reference voltage due to temperature changes or other factors as compared to prior power supplies. Thus, power supply system 100 can more accurately control minimum primary current and minimum output power.

### Operation of the Power Supply:

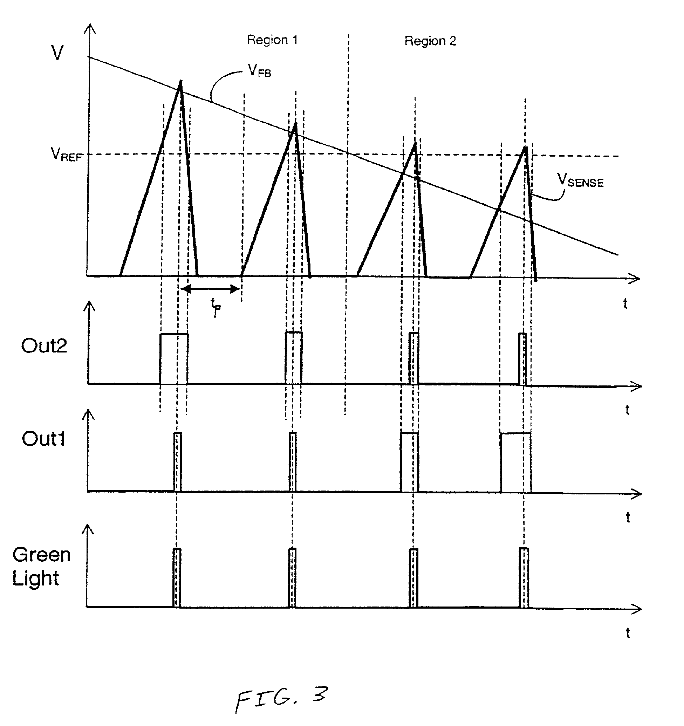

FIG. 3 is a voltage waveform illustrating the operation of power supply system 100. Specifically, Vₛₑₙₛₑ, V_{FB} and V_{ref} are shown as a function of time in FIG. 3. Further, signals Out1, Out2, and Green Light are shown for the corresponding time range. The operation of power supply system 100 is presented in two parts corresponding to a Region 1 (in which V_{FB} >V_{ref}) and a Region 2 (in which V_{FB} <V_{ref}) as indicated in FIG. 3.

### Region 1 (V_{FB} > V_{ref}) :

For Region 1, and starting this operational description from an initially demagnetized state of power supply system 100, transistor M1 is turned on and the primary current through L_{P} gradually increases, storing energy in L_{P}. Vₛₑₙₛₑ increases, as shown in FIG. 3 in Region 1, as the primary current increases the magnitude of the voltage change across Rₛₑₙₛₑ.

Vₛₑₙₛₑ is less than V_{FB}, so Out1 is zero or in a logic low state. Vₛₑₙₛₑ is less than V_{ref}, so Out2 is zero. Thus, Green Light is zero and logic cell 202 is not yet reset.

As Vₛₑₙₛₑ increases to be greater than V_{ref}, Out2 goes to a logic 1 or logic high state. Green Light remains low since Out1 is low.

As Vₛₑₙₛₑ increases to be temporarily greater than V_{FB}, Out1 goes high. Green Light goes high since both Out1 and Out2 are now high, thus resetting signal Q to a low state and turning off transistor M1.

Because transistor M1 is off, Vₛₑₙₛₑ fairly quickly falls as power is transferred to the secondary side of transformer 200. As Vₛₑₙₛₑ falls, Out1 and Out2 return to zero and so does Green Light. As discussed above, transistor M1 turns on again after demagnetization detection, at which time logic cell 202 is again set so that Q goes high. The time between the turning off and on again of transistor M1 is indicated by time tₚ, which is a deadtime that varies according to internal circuit block propagation delays and other delays that may be intentionally designed into power supply system 100. By the above operation and according to the present invention, secondary feedback signal V_{FB} is used to clamp the primary current to a maximum level and control the maximum output power.

### Region 2 (V_{FB}< V_{ref}):

At low power output levels, V_{FB} falls below V_{ref}, which corresponds to operation in Region 2. As shown in FIG. 3, when transistor M1 is turned on to begin another charging cycle, Vₛₑₙₛₑ begins to rise again.

As Vₛₑₙₛₑ increases above V_{FB}, Out1 goes high. Then, as Vₛₑₙₛₑ temporarily increases above V_{ref}, Out2 also goes high so that Green Light goes high. This resets signal Q to zero, turning off transistor M1 and causing Vₛₑₙₛₑ to fall.

As Vₛₑₙₛₑ falls below V_{ref}, Out2 goes low, which causes Green Light to go low. Then, as Vₛₑₙₛₑ falls below V_{FB}, Out1 goes low. Thus, according to the present invention, V_{ref} is used to clamp the minimum peak primary current and controls the minimum output power from power supply system 100. When demagnetization is detected, the output of comparator C3 goes high and sets signal Q high, thus turning on transistor M1 for another charging cycle.

Although specific embodiments have been described above, numerous modifications and substitutions may be made thereto without departing from the spirit of the invention. For example, while the description above is discussed specifically in the context of an AC-DC converter, other power supply configurations may be used with the present invention including DC-DC converters. Also, the present invention may also be used with other electronic devices than those mentioned above, such as, for example, set-top boxes, televisions, decoders, and personal computer standby power supplies. Accordingly, the invention has been described by way of illustration rather than limitation.

## Claims

1. A control circuit for controlling a power supply, comprising:
a first comparator having a common input;
a second comparator coupled for receiving the common input; and
wherein an output of the first comparator and an output of the second comparator are coupled in combination for providing a control signal for controlling the power supply.

2. A control circuit comprising:
a first comparator having a first input coupled to a reference voltage and a second input coupled for receiving a primary feedback signal; and
a second comparator having a first input coupled for receiving the primary feedback signal and a second input coupled for receiving a secondary feedback signal.

3. The control circuit of claim 2, wherein the first comparator provides an output coupled for controlling a power supply.

4. The control circuit of claim 2, further comprising a logic gate having a first input coupled to an output of the first comparator and a second input coupled to an output of the second comparator.

5. The control circuit of claim 4, wherein the logic gate has an output coupled for providing a control signal to a power supply.

6. The control circuit of claim 5, further comprising a latch wherein the output of the logic gate is coupled to a first input of the latch.

7. The control circuit of claim 6, further comprising a comparator for demagnetization detection having an output coupled to a second input of the latch.

8. The control circuit of claim 7, wherein an output of the latch provides the control signal.

9. A control circuit comprising a plurality of comparators acting in combination to provide a control signal for clamping a peak power supply primary current.

10. The control circuit of claim 9, further comprising a reference voltage coupled to an input of at least one of the plurality of comparators.

11. The control circuit of claim 10, wherein the peak power supply primary current is substantially clamped to a minimum level corresponding to the reference voltage.

12. The control circuit of claim 11, wherein the peak power supply primary current is substantially clamped to a maximum level corresponding to a feedback signal received from a power supply output.

13. A method of operating a control circuit, the method comprising:
receiving a first feedback voltage coupled to provide an input to at least two comparators in the control circuit; and
providing a control signal in response to the first feedback voltage being greater than a reference voltage.

14. The method of claim 13, wherein the control signal is provided for clamping a peak primary current to a minimum level.

15. The method of claim 14, further comprising receiving a second feedback voltage and wherein the control signal is provided for clamping the peak primary current to a maximum level in response to the first feedback voltage being greater than the second feedback voltage.

16. The method of claim 15, further comprising providing a substantially constant minimum power output when the second feedback voltage is less than the reference voltage.

17. A method of operating a control circuit for a power supply, the method comprising combining the outputs of a first comparator and a second comparator to provide a control signal.

18. A power supply system comprising:
a power supply circuit comprising a primary side and a secondary side; and
a control circuit comprising a first comparator and a second comparator and comprising inputs for receiving, in use, a primary feedback signal from the primary side and a secondary feedback signal from the secondary side, wherein the primary feedback signal is coupled to the first comparator and the secondary feedback signal is coupled to the second comparator.

19. The power supply system of claim 18, wherein the primary feedback signal is further coupled to the second comparator.

20. The power supply system of claim 19, wherein:
the primary feedback signal corresponds to a primary current in the primary side; and
the control circuit further comprises an output for providing a control signal to control the primary current.

21. The power supply system of claim 20, wherein:
the peak primary current is clamped to a minimum level corresponding to a reference voltage coupled to the first comparator; and
the peak primary current is clamped to a maximum level corresponding to the secondary feedback signal.

22. The power supply system of claim 19, wherein an output of the first comparator and an output of the second comparator are coupled to an input side of a logic gate, wherein the logic gate has an output coupled for providing a control signal to the primary side of the power supply circuit.
